# EUROPÄISCHE PATENTSCHRIFT

(11) **EP 1 873 085 B1**
(45) Veröffentlichungstag und Bekanntmachung des Hinweises auf die Patenterteilung: **17.02.2010**
(21) Anmeldenummer: 07012644.6
(22) Anmeldetag: 28.06.2007
(51) Int. Cl.: B65D 90/34, F16K 17/36

(54) **Explosionsschutzklappe**
Explosion protection flap
Clapet anti-explosion

(30) Priorität: 30.06.2006 DE 102006030174
(43) Veröffentlichungstag der Anmeldung: 02.01.2008
(73) Patentinhaber: Reitinger Engineering Peter Reitinger, 64807 Dieburg (DE)
(72) Erfinder: Reitinger Engineering Peter Reitinger, 64807 Dieburg (DE)
(74) Vertreter: Behrens, Helmut

(56) Entgegenhaltungen:
- DE-A1- 3 626 946
- GB-A- 769 064
- US-A- 5 141 020
- US-A1- 2001 032 849

## Beschreibung

Die Erfindung betrifft eine Explosionsschutzklappe zum Ausgleich von Druckunterschieden in geschlossenen Anlagen nach dem Oberbegriff des Patentanspruchs 1.

In allen geschlossen Anlagen, die mit staub- oder gasexplosionsgefährdeten Schüttgütern betrieben werden, wie Rohrleitungen, Silos, Behälter und dergleichen müssen Vorrichtungen zur Druckentlastung vorgesehen sein. Dazu sind Berstscheiben bekannt, die an explosionsgefährdeten Behältern, insbesondere Silos, angebracht werden und bei einem Überdruck von 60 bis 80 mbar zum Ausgleich von Druckstößen bei möglichen Staub- oder Gasexplosionen zerbrechen. Diese Berstscheiben haben den Vorteil, dass sie bei Überdrücken durch die sofortige Freigabe einer Ausgleichsöffnung eine so genannte Entlastungsfähigkeit von nahezu 100 % aufweisen. Allerdings werden bei einem Überdruckausgleich die Berstscheiben auch zerstört, so dass deren Erneuerung einen erheblichen Aufwand bedeutet und eine relativ lange Betriebsuhterbrechung erfordert.

Eine Explosionsschutzklappe für Behälter zum Ausgleich von Druckstößen bei Staub- oder Gasexplosionen ist aus der DE 36 26 946 A1 bekannt. Diese Explosionsschutzklappe besteht im Wesentlichen aus einem Auslassstutzen, der an geeigneter Stelle an einem explosionsgefährdeten Behälter oder Silo angebracht ist. Dieser Auslassstutzen wird von einem ebenen Klappendeckel in Leichtbauweise geschlossen, der von einem federbelasteten Verschlusselement in seiner Schließstellung im überdruckfreien Betriebszustand fixiert wird. Dabei ist der Klappendeckel durch eine Schwenkachse am Auslassstutzen gelagert. Im Explosionsfalle löst sich bei einem vorgegebenen Überdruck das federbelastete Verschlusselement und der Klappendeckel öffnet sich durch ein plötzliches Verschwenken um die Schwenkachse. Da der Klappendeckel in Leichtbauweise gefertigt ist, besitzt er zwar eine verhältnismäßig geringe Entlastungsfähigkeit von etwa 50 bis 80 %, kann aber durch den Explosionsdruck auch leicht beschädigt werden. Deshalb sind zur Dämpfung der Öffnungsgeschwindigkeit zusätzlich noch ein federnd abgestützter Auffangteller und mindestens noch eine Pufferplatte in einem Winkelabstand über dem Klappendeckel am Schwenklager drehbar befestigt. Beim explosionsartigen öffnen des Klappendeckels entstehen so Luftpolster zwischen dem Klappendeckel und dem Pufferplatten und dem Auffangteller, durch die die Öffnungsgeschwindigkeit stark abgebremst werden soll. Da zur Dämpfung zusätzlich noch eine progressive Blattfeder oberhalb des Klappendeckels vorgesehen ist, gegen die sich der Auffangteller abstützt, ist ein verhältnismäßig großer konstruktiver Aufwand für die Dämpfung des Klappendeckels notwendig.

Der Erfindung liegt deshalb die Aufgabe zugrunde, eine Vorrichtung zum Ausgleich von Druckstößen in geschlossenen Anlagen, wie Rohrleitungen, Silos oder Behältern derart zu verbessern, dass im Explosionsfall ein schneller Druckausgleich erfolgt, ohne dass Funktionsteile zerstört werden und die Vorrichtung schnell wieder funktionsbereit ist und dies bei einer möglichst kompakten einfachen Bauweise.

Diese Aufgabe wird durch die im Patentanspruch 1 angegebene Erfindung gelöst. Weiterbildungen und vorteilhafte Ausführungsbeispiele sind in Unteransprüchen angegeben.

Die Erfindung mit der Entlastungsvorrichtung hat den Vorteil, dass dadurch eine Entlastungsfähigkeit erreichbar ist, die nahezu 100% beträgt. Dadurch wird insbesondere ein verhältnismäßig schneller Überdruckausgleich erreicht, ohne eine besonders aufwendige Leichtbaukonstruktion zu schaffen. Dabei hat die besondere Ausgestaltung der Erfindung mit Zugfedern am Klappendeckelendbereich den Vorteil, dass hierdurch insbesondere im entscheidenden anfänglichen Öffnungswinkelbereich eine starke Erhöhung der Öffnungsgeschwindigkeit erreichbar ist, während diese Beschleunigungswirkung beim hinreichenden Öffnungszustand nicht mehr wirksam ist und damit einer Abbremsung nicht mehr entgegenwirkt. Durch die Zugfederausführung am Klappendeckelende wird gleichzeitig auch eine sehr kompakte und einfache konstruktive Ausgestaltung erreicht, die insbesondere auch vorteilhaft als Baueinheit mit der Schwenklageranordnung ausführbar ist.

Eine besondere Ausführung der Erfindung hat den Vorteil, dass durch die Dämpfungsvorrichtung mit dem anfangs dämpfungsfreien Öffnungswinkelbereich im Explosionsfall ein schnelles Öffnen der Explosionsschutzklappe und damit ein schneller Druckausgleich gewährleistet ist. Dabei hat insbesondere die Anordnung der Dämpfungsvorrichtung unterhalb des Klappendeckels den Vorteil, dass dadurch eine kompakte platzsparende Bauart erreicht wurde, die insbesondere bei schmalen hohen Silos oder an explosionsgefährdeten Rohranlagen vorteilhaft anbringbar ist. Die Ausführung der Erfindung mit den Federelementen als Dämpfungselement hat den Vorteil, dass dadurch eine einfache konstruktive Ausgestaltung erreicht wurde. Diese Ausführung hat gleichzeitig den Vorteil, dass durch die Federelemente der Klappendeckel ab einem vorbestimmten Öffnungswinkel auch wieder in eine Schließlage zurückbeschleunigt wird, so dass dadurch gleichzeitig ein selbsttätiges Verschließen ohne weitere Montage oder Reparaturarbeiten ermöglicht wird. Durch die Ausführung der Erfindung mit der Gleitlageanordnung ergibt sich zusätzlich der Vorteil, dass hierdurch anfangs ein beliebig großer dämpfungsfreier Öffnungswinkelbereich vorgegeben werden kann, der ohne großen Aufwand und in kompakter Ausgestaltung ohne Erhöhung der Entlastungsfähigkeit eine effektive Dämpfung der Öffnungsgeschwindigkeit ermöglicht.

Eine weitere besondere Ausführung der Erfindung mit der integrierten Zurückhaltevorrichtung in der Lageranordnung hat den Vorteil, dass dadurch eine besonders platzsparende kompakte Explosionsschutzklappe sowie ein selbsttätiges Verschließen des Klappendeckels erreichbar ist. Dabei hat insbesondere die besondere Ausführung mit den überlappenden Blattfederelementen und den gegen eine federbelasteten Andruckbolzen verschwenkbaren Fixierbolzen den Vorteil, dass dadurch auf einfache Weise der vorgesehene Öffnungsdruck einstellbar ist und dies nach einem Explosionsvorgang ein einfaches manuelles Verschließen des Klappdeckels ermöglicht ohne Teile auszutauschen und ohne den Öffnungsdruck neu kalibrieren zu müssen.

Eine zusätzliche besondere Ausführung der Erfindung mit der integrierten Unterdruckausgleichsvorrichtung hat den Vorteil, dass hierdurch eine verhältnismäßig große Betätigungsfläche zur Verfügung steht, die einen genauen Öffnungsdruck und einen großen Öffnungsquerschnitt ermöglicht, wodurch ein schneller Unterdruckausgleich gewährleistet ist. Da diese Unterdruckausgleichsvorrichtung im wesentlichen aus einer Rundscheibe zur Abdeckung einer Öffnung im Klappendeckel besteht, wird dadurch auch das Gewicht des Klappendeckels nicht wesentlich erhöht, wodurch sich auch die Entlastungsfähigkeit nicht verschlechtert. Da sich durch diese Unterdruckausgleichsvorrichtung auch das Volumen des Klappendeckels nicht vergrößert, ergibt sich vorteilhafterweise wiederum eine einfache und platzsparende Bauweise.

Bei einer weiteren besonderen Ausführungsart der Erfindung mit einer Schicht eines nicht haftenden wasserabweisenden Dichtmittels auf der Unterseite des Klappendeckels ergibt sich der Vorteil, dass diese Explosionsschutzklappe auch bei tiefen Temperaturen nicht anfrieren kann, so dass sonst übliche Heizvorrichtungen entfallen können.

Die Erfindung wird anhand eines Ausführungsbeispiels, das in der Zeichnung dargestellt ist, näher erläutert. Es zeigen:
- Fig. 1:: eine perspektivische Darstellung einer Explosionsschutzklappe mit rechtseitig dargestellter Schwenklageranordnung;
- Fig. 2:: eine perspektivische Darstellung einer Explosionsschutzklappe bei linksseitig dargestellter Schwenklageranordnung, und
- Fig. 3:: einen vergrößerten Ausschnitt A der rechtseitigen Schwenklageranordnung.

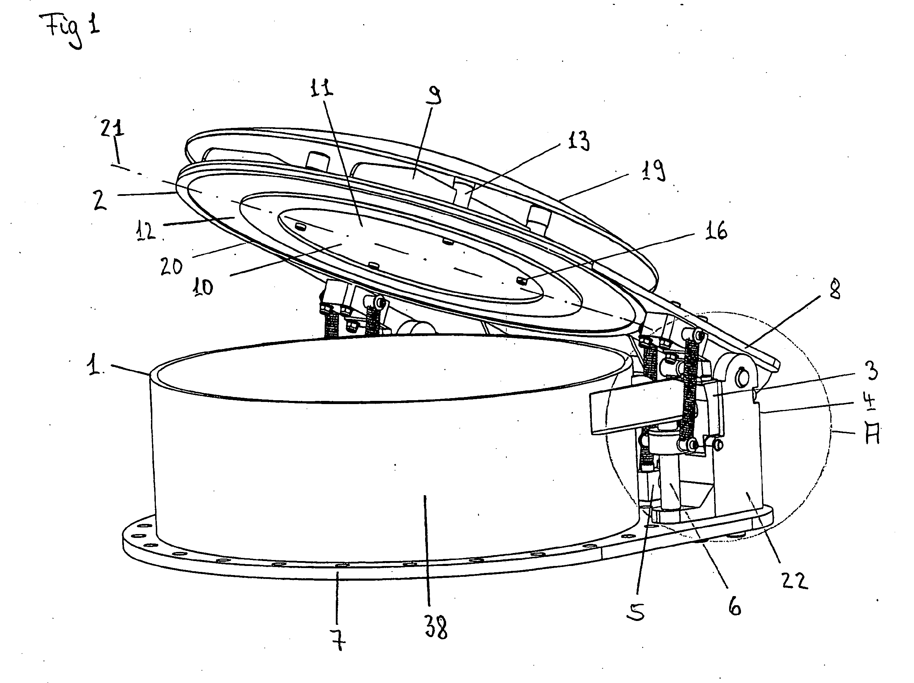

Die in Fig. 1 der Zeichnung dargestellte Explosionsschutzklappe besteht im Wesentlichen aus einem einen Auslassstutzen 1 verschließenden ebenen Klappendeckel 2, der von einer Zuhaltevorrichtung 3 in seiner Schließposition im überdruckfreien Betriebszustand gehalten wird und um eine Schwenklageranordnung 4 in Öffnungsrichtung verschwenkbar ist. Dabei ist an der Schwenklageranordnung 4 noch eine Entlastungsvorrichtung 5 vorgesehen, die die Öffnungsgeschwindigkeit anfangs beschleunigt und zusätzlich noch eine Dämpfungsvorrichtung 6, die die Öffnungsgeschwindigkeit ab einem bestimmten Öffnungswinkel wieder abbremst.

Eine derartige Explosionsschutzklappe wird vorzugsweise auf der oberen Abdeckfläche von Silos oder anderen Behältern montiert, in denen staubförmige Schüttgüter bewegt werden, die leicht zu Explosionen neigen. Im Explosionsfall soll diese Explosionsschutzklappe sehr schnell öffnen, um einen raschen Druckausgleich zu ermöglichen, aber danach ohne großen Montageaufwand wieder verschließbar zu sein, damit nicht lange Schüttgut austreten kann und der Schüttguttransport in der Anlage nur kurzfristig unterbrochen ist. Dazu wird meist am höchsten Punkt derartiger explosionsgefährdeter geschlossener Anlagen eine Öffnung nach außen vorgesehen, auf die die Explosionsschutzklappe befestigt wird. Dabei entspricht die Öffnung dem Anschlussstutzendurchmesser, über dem der Druckausgleich zu Atmosphäre erfolgt. Derartige Auslassstutzen sind meist rund, quadratisch oder rechteckig ausgebildet und besitzen bei einer runden Ausführung vorzugsweise Durchmesser von 500 bis 1500 mm. Der Auslassstutzen 1 besitzt dabei einen Rohrstutzen 38, der anlagenseitig einen Montagerand 7 aufweist, in dem Löcher zum dichten Anschrauben auf dem Silo und zur Befestigung der Lager- 4 und Entlastungsvorrichtung 5 angeordnet sind. Auf dem gegenüberliegenden Rohrstutzenende wird zum dichten Verschließen im überdruckfreien Betriebszustand vorzugsweise ein runder Klappendeckel 2 fixiert. Der Klappendeckel 2 besteht aus einem flachen relativ dünnen Stahlblech, der im Bereich der Schwenklageranordnung 4 in einem rechteckigen Endbereich 8 übergeht. Um im Explosionsfall eine schnelle Öffnung und damit eine große Entlastungsfähigkeit zu gewährleisten, ist der Klappendeckel 2 in Leichtbauweise ausgeführt, dessen Stabilität durch zwei hohe Längsstege 9 auf der Deckeloberfläche verstärkt ist.

Im Zentrum des runden Klappendeckelbereichs ist noch eine Unterdruckausgleichsvorrichtung 10 integriert, die auch die im Zusammenhang mit Explosionserscheinungen entstehenden Unterdrücke in der geschlossenen Anlage ausgleichen soll.

Diese besteht aus einer flachen Rundscheibe 11, die in eine angepasste Aussparung im Zentrum des Klappendeckels 2 eingelassen ist. Dabei ist der Querschnitt der Aussparung vorzugsweise 25 bis 75 % des runden Klappendeckelquerschnitts und ermöglicht daher einen schnellen Unterdruckausgleich und durch die große Betätigungsfläche auch eine sichere Betätigungswirkung auch bei nur geringen Unterdruckwerten.

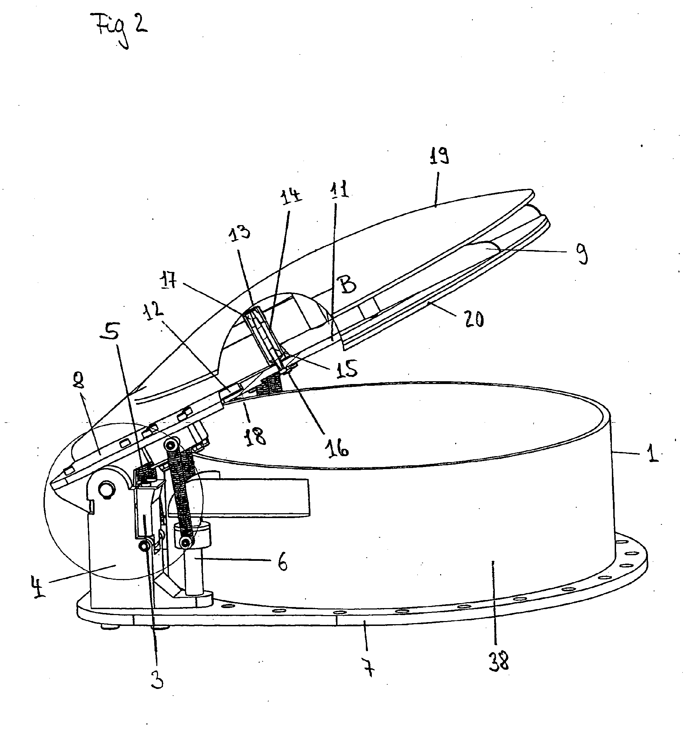

Die nähere Ausführung der Unterdruckausgleichsvorrichtung 10 ist aus Fig. 2 der Zeichnung ersichtlich, in der ein Teil des Klappendeckelbereichs als Schnittbild B dargestellt ist. Aus diesem Schnittbildausschnitt B ist erkennbar, dass der Randbereich der Rundscheibe 11 den Ringbereich 12 des Klappendeckels 2 abdichtend überlappt. Dabei wird die Rundscheibe 11 von 4 Befestigungselementen 13 gehalten, die zwischen den Längsstegen 9 auf der Oberseite des Klappendeckels 2 befestigt sind. Die Befestigungselemente 13 bestehen aus einer Rundhülse 14, in der sich eine Druckfeder 15 befindet, die einen Befestigungsbolzen 16 umschlingt. Die Druckfeder 15 stützt sich einerseits auf den Hülsenboden und andererseits auf einen längs verschieblichen Führungsbolzen 17 ab, in den der Befestigungsbolzen 16 eingeschraubt ist. Bei einem vorgegebenen Unterdruck wird über die Befestigungsbolzen 16 eine Zugkraft auf die Führungsbolzen 17 übertragen, die bei Überwindung der Federkraft die Rundscheibe 12 in Richtung des Auslassstutzens 1 bewegen, so dass zwischen den überlappenden Ringbereich 12 und der Rundscheibe 11 ein Druckausgleichsspalt 18 entsprechend der Größe des Unterdrucks geöffnet wird und für einen Unterdruckausgleich sorgt. Zum Schutz der Unterdruckausgleichsvorrichtung 10 ist der Klappendeckel 2 an seiner Oberseite noch von einem runden Schutzdeckel 19 aus Kunststoff oder einem Metallblech abgedeckt.

An der Auflagefläche des Klappendeckels 2 und des Rohrstutzens 38 ist zur besseren Abdichtung an der Klappendeckelunterseite noch ein ringförmiges elastisches Dichtelement 20 vorgesehen, das an der Auflagefläche mit einer nicht haftenden wasserabweisenden Kunststoff-, Fett-, Talkum- und/oder Silikonschicht versehen ist, um insbesondere auch bei tiefen Temperaturen ohne Heizleistung ein Anhaften zu verhindern. Zur Verbesserung der Schließwirkung ist dieses Dichtelement 20 aus einem elastomeren Dichtwerkstoff gefertigt und besitzt vorzugsweise eine Höhe von ca. 5 bis 8 mm, durch das eine Dichtigkeit bis 30 mbar gewährleistet wird.

Am rechteckigen Endbereich 8 des Klappendeckels 2 ist dieser mit mindestens einer Schwenklageranordnung 4, einer Zuhalte-3, einer Dämpfungs- 6 und einer Entlastungsvorrichtung 5 verbunden. Dabei sind zur Gewährleistung einer sicheren Funktion der Explosionsschutzklappe am rechteckigen Endbereich 8 des Klappendeckels 2 und des Montagerandes 7 jeweils zwei Schwenklageranordnungen 4, Zuhalte- 3, Dämpfungs- 6 und Entlastungsvorrichtungen 5 vorgesehen, die symmetrisch zu einer Klappenlängsachse 21 angeordnet sind. Im Grunde würde aber auch jeweils eine diese An- 6 und Vorrichtungen 3,4,5 auf der Klappenlängsachse 21 ausreichen.

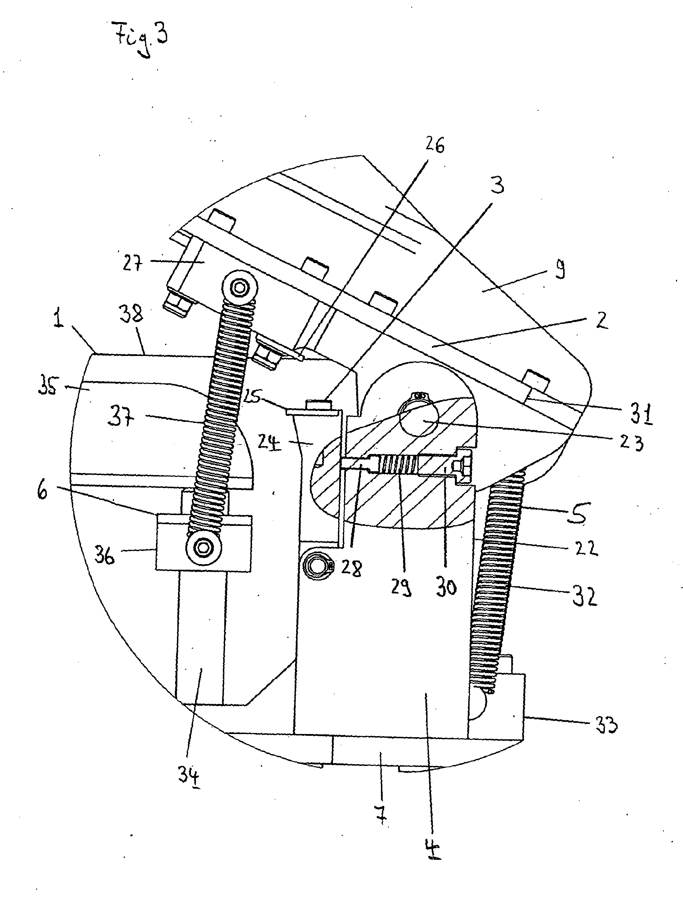

Die Ausbildung der Schwenklageranordnung 4, der Zuhalte- 3, der Dämpfungs- 6 und der Entlastungsvorrichtung 5 ist im Einzelnen aus Fig. 3 der Zeichnung ersichtlich, die einen vergrößerten Ausschnitt A der Fig. 1 darstellt. Dabei wird der Klappendeckel 2 im Wesentlichen von der Schwenklageranordnung 4 mit den Auslassstutzen 1 verbunden. Dazu ist senkrecht auf dem Montagerand 7 des Auslassstutzens 1 eine Lagerstütze 22 befestigt, die das mit der Deckelklappe 1 verbundene Schwenklager 23 trägt.

In dieser Schwenklageranordnung 4 ist die Zuhaltevorrichtung 3 integriert, die den Klappendeckel 2 vor einem Explosionsvorgang in einer geschlossenen Deckelposition hält.

Dazu ist an der Lagerstütze 22 in Richtung des Rohrstutzens 38 ein Fixierbalken 24 verschwenkbar angeordnet, der in Schließposition rechtwinklig zum Klappendeckel 2 und parallel zur Lagerstütze 22 angeordnet ist. Am oberen Fixierbalkenende ist ein flaches erstes Blattfederelement 25 aufgeschraubt, das parallel zum geschlossenen Klappendeckel 2 ausgerichtet ist und den Fixierbalken 24 um ca. 5 mm in Richtung des Rohrstutzens 38 überragt. Dem gegenüber ist an der Unterseite des Klappendeckels 2 an einem Abstandselement 27 ein weiteres auskragendes zweites Blattfederelement 26 angebracht, das im geschlossenen Zustand unter das erste Blattfederelement 25 überlappend greift.

Zur Fixierung der Schließstellung und zu einer Einstellung des Öffnungsdrucks von ca. 80 bis 100 mbar ist in der Lagerstütze 22 noch ein Andruckbolzen 28 eingelassen, der durch eine Druckfeder in Form einer Schraubenfeder 29 gegen die Rückwandfläche des Fixierbalkens 24 gedrückt wird. Dazu ist in der Bohrung für den Andruckbolzen 28 noch eine Einstellschraube 30 vorgesehen, auf der sich die Schraubenfeder 29 rückseitig abstützt und mit der die Andruckkraft des Andruckbolzens 28 eingestellt werden kann. Zusätzlich kann die Einstellschraube 30 auch so weit aus der Bohrung herausgeschraubt werden, um nach einem Explosionsfall den Fixierbalken 24 bis an die Lagerstütze 22 zurückzuschwenken, um die zweite Blattfeder 26 wieder unter die erste Blattfeder 25 zu positionieren und den Klappendeckel 2 wieder in der Schließposition zu halten. Bei einem entsprechenden Öffnungsdruck von 80 bis 100 mbar verbiegen sich die überlappenden beiden Blattfedern 25, 26, so dass auch eine Kraft auf den Andruckbolzen 28 ausgeübt wird, der sich gegen den Druck der Schraubenfeder 29 in Richtung auf die Einstellschraube 30 so weit verschiebt, bis die überlappenden Blattfedern 25, 26 den Überlappungsabstand verlassen und den Klappendeckel 2 ungehindert aufschwenken lassen.

Um die Aufschwenkgeschwindigkeit in Explosionsfall anfangs zu erhöhen, ist zusätzlich noch eine Entlastungsvorrichtung 5 am Klappendeckelende 31 in vorgegebenen radialen Abstand vom Schwenklager 23 bzw. der Schwenklagerachse angebracht. Dadurch kann die Entlastungsfähigkeit wie bei Berstscheiben nahezu auf 100 % erhöht werden. Diese Entlastungsvorrichtung 5 besteht im Wesentlichen aus ein oder mehreren Krafterzeugungselementen, die vorzugsweise als Zufederelemente 32 ausgebildet sind, die im geschlossenen Zustand eine vorbestimmte Öffnungskraft auf den Klappendeckel 2 ausüben. Als Zugfederelemente 32 werden dabei vorzugsweise Schraubenfedern eingesetzt, die zwischen dem Klappendeckelende 31 und dem Montagerand 7 oder einem Lagerstützenfußteil 33 gespannt werden. Die Entlastungsvorrichtung 5 könnte auch als Druckfederelement radial zwischen dem Rohrstutzen 38 und der Schwenklageranordnung 4 angeordnet werden, wobei es nur auf eine Anfangs wirksame Öffnungskraft ankommt, die auch durch einen pneumatischen Druckzylinder und dergleichen erzeugt werden kann. Dabei soll die Erhöhung der Öffnungsgeschwindigkeit nur für einen Öffnungswinkelbereich wirken, der ausreicht, den hohen Anfangsdruck auszugleichen, dem die Trägheitskraft des Klappendeckels 2 anfangs entgegenwirkt. Deshalb wird die Entlastungsvorrichtung 5 vorzugsweise nur in einem Öffnungswinkelbereich von 15° bis 45° wirksam. Danach muss im Grunde der Klappendeckel 2 wieder abgebremst werden, um eine Beschädigung oder ein Abreißen zu verhindern.

Deshalb ist zusätzlich noch eine Dämpfungsvorrichtung 6 radial zwischen dem Schwenklager 23 und dem Rohrstutzen 38 vorgesehen, die aber erst nach der Entlastungsvorrichtung 5 ab einem dämpfungsfreien Öffnungswinkelbereich von 15° bis 45° wirkt. Dazu ist am Lagerstützenfußteil 33 oder dem Montagerand 7 ein vertikaler Gleitbolzen 34 als Gleitlageranordnung befestigt, der an einem horizontalen Anschlagswinkel 35 als Anschlagmittel endet. Koaxial zum Gleitbolzen 34 ist ein verschiebbarer Gleitring 36 angeordnet, an dem ein Dämpfungselement in Form einer Zugfeder 37 befestigt ist. Dabei ist das gegenüber liegende Ende der Zugfeder 37 am Abstandselement 27 unterhalb des Klappendeckels 2 drehbar angebracht. Die Länge Gleitbolzens 34 ist dabei auf den vorgesehenen dämpfungsfreien Öffnungswinkelbereich abgestimmt, an dem der Klappendeckel 2 zum Überdruckausgleich hinreichend geöffnet ist und die Entlastungsvorrichtung 5 nicht mehr wirkt. Als Dämpfungselement 37 können auch pneumatische- oder hydraulische Druckmittelzylinder oder mechanische Bremsmittel verwendet werden, die erst nach einem vorgegebenen dämpfungsfreien Öffnungswinkelbereich wirken, der auch zeitlich bestimmbar ist. Da es bei der Dämpfungsvorrichtung 6 im Wesentlichen nur auf die Dämpfungskraft ankommt, die die Winkelgeschwindigkeit des Klappendeckels 2 ab einem vorgegebenen Öffnungswinkelbereich abbremsen soll, könnte dies auch mit einer Druckfeder als Dämpfungselement 37 und einem Gleitbolzen 34 am Klappendeckelende 31 neben der Entlastungsvorrichtung 5 realisiert werden.

Die vorbeschriebene Explosionsschutzklappe arbeitet nach dem Einbau wie folgt:

Im normalen Anlagenbetrieb im überdruckfreien Betriebszustand ist die Explosionsschutzklappe geschlossen und wird durch die überlappenden Blattfederelemente 25,26 der Zuhaltevorrichtung 5 in ihrer geschlossenen Position gehalten, wobei in der Anlage auch Betriebsdrücke von 6 mbar bis 12 mbar herrschen können. Im Explosionsfall werden ab einem Überdruck von 60 bis 80 mbar die beiden etwa 5 mm überlappenden Blattfedern 25, 26 der Zuhaltevorrichtung 3 gegeneinander verbogen. Dadurch verschwenkt sich gleichzeitig auch der Fixierbolzen 24 gegenüber der ortsfesten Lagerstütze 22, so dass die Blattfederelemente 25,26 aus dem Überlappungsbereich gleiten, wodurch die Zuhaltevorrichtung 5 nicht mehr wirkt und der Klappendeckel 2 durch den Überdruck im Auslassstutzen 1 ungehindert geöffnet wird.

Um die Wirkung der Trägheitskraft des Klappendeckels 2 zu kompensieren und damit eine hohe Entlastungsfähigkeit zu erreichen, wirkt anfangs die zusätzliche Öffnungskraft der Entlastungsvorrichtung 5 durch das Zugfederelement 32. Dies sorgt für eine zusätzliche Winkelbeschleunigung des Klappendeckels 2, so dass ein schneller Überdruckausgleich durch die Explosionsklappe erfolgt.

Ab einem vorgegebenen Öffnungswinkelbereich tritt dann die Wirkung der Dämpfungsvorrichtung 6 in Erscheinung, wenn nämlich der Gleitring 36 den Anschlagswinkel 35 als Aufschlagmittel erreicht hat. Dann bremst die Zugfeder 37 den beschleunigten Klappendeckel 2 gegenüber einer weiteren Öffnung stark ab und verhindert dadurch ein Anschlagen oder Abreißen des Klappendeckels 2. Gleichzeitig entwickelt die Zugfeder 37 bei entsprechend großem Öffnungswinkel eine starke Schließkraft, die den Klappendeckel 2 nach dem Überdruckausgleich wieder in die Schließstellung befördert und durch die Wirkung des elastischen Dichtelements 20 die Zuhaltevorrichtung 3 im Regelfall wieder selbsttätig verschließt.

Da es infolge der Explosionswirkung nachfolgend häufig zu Unterdruckerscheinungen kommt, können diese durch die in den Klappendeckel 2 integrierte Unterdruckausgleichsvorrichtung 10 selbsttätig ausgeglichen werden, ohne dass es zu Beschädigungen an der geschlossenen Anlage kommen kann. Dabei wird die Rundscheibe 11 durch den Unterdruck gegen die Federkraft der Druckfedern 15 in den Befestigungselementen 13 in Richtung des Auslassstutzens 1 bewegt, so dass über den langen Druckausgleichsspalt 18 schnell ein Unterdruckausgleich in der Anlage erfolgt.

Die besondere Wirkung der Explosionsschutzklappe liegt in der additiven Wirkung der neuartigen Schwenklageranordnung 4 mit integrierter Zuhaltevorrichtung 3 und der neuen Entlastungs- 5 und Dämpfungsvorrichtung 6 und der im Klappendeckel 2 integrierten Unterdruckausgleichsvorrichtung 10. Allerdings sind die einzelnen neuen Anordnungen 4 und Vorrichtungen 3,5,6,10 auch unabhängig voneinander in einer Explosionsschutzklappe einsetzbar und bilden dabei separate erfinderische Verbesserungen bisher bekannter Explosionsschutzklappen.

## Patentansprüche

1. Explosionsschutzklappe zum Ausgleich von Druckunterschieden in geschlossenen Anlagen, insbesondere in Behältern, Silos, Rohrleitungen und dergleichen, bei denen aufgrund der Anlageninhalte Explosionsgefahr besteht, mit einem um mindestens eine Schwenklageranordnung (4) verschwenkbaren Klappendeckel (2), der durch mindestens eine federbelastete Zuhaltevorrichtung (3) im überdruckfreien Betriebszustand einen Auslassstutzen (1) geschlossen hält und mindestens noch eine Dämpfungsvorrichtung (6) aufweist, **dadurch gekennzeichnet, dass** im Bereich der Schwenklageranordnung (4) in einem vorgegebenen radialen Abstand vom Schwenklager (23) mindestens noch eine Entlastungsvorrichtung (5) vorgesehen ist, die mindestens ein Krafterzeugungselement (32) aufweist, dass den Klappendeckel (2) mindestens anfangs mit einer Öffnungskraft belastet.

2. Explosionsschutzklappe nach Anspruch 1, **dadurch gekennzeichnet, dass** die Entlastungsvorrichtung (5) am Klappendeckelende (31) zwischen dem Klappendeckel (2) und einem ortsfesten Bauteil im Bereich des Lagerstutzenfusses (33) oder an einem Befestigungsrand (7) des Auslassstutzens (1) befestigt ist und dass das Krafterzeugungselement als Druck- oder Zugfederelement (32) ausgebildet ist.

3. Explosionsschutzklappe nach einem der Ansprüche 1 oder 2, **dadurch gekennzeichnet, dass** die Entlastungsvorrichtung (5) parallel zur Schwenklageanordnung (4) und in geringem Abstand zu dieser vorgesehen ist, so dass beide eine Baueiheit bilden.

4. Explosionsschutzklappe nach einem der vorhergehenden Ansprüche, **dadurch gekennzeichnet, dass** die Dämpfungsvorrichtung (6) in einem vorgegebenen radialen Abstand von einem Schwenklager (23) der Schwenklageranordnung (4) zwischen dem Klappendeckel (2) und einem ortsfesten Bauteil unterhalb des Klappendeckels (2) angeordnet ist und mindestens ein Dämpfungselement (37) mit einer Druck- oder Zugfeder (37) enthält, die an einer dämpfungsfreien Gleitlageranordnung (34,35,36) befestigt ist, dessen Gleitstrecke einen vorgegebenen dämpfungsfreien Öffnungswinkelbereich entspricht.

5. Explosionsschutzklappe nach Anspruch 4, **dadurch gekennzeichnet, dass** die Dämpfungsvorrichtung (6) radial zwischen dem Schwenklager (23) und einem Rohrstutzen (38) des Auslassstutzens (1) unterhalb des Klappendeckels (2) angeordnet ist.

6. Explosionsschutzklappe nach einem der Ansprüche 4 oder 5, **dadurch gekennzeichnet, dass** die Gleitlageranordnung aus einem tangential zum öffnungswinkel ausgerichteten Gleitbolzen (34) und diesen koaxial umgreifende schmalen Gleitring (36) sowie einem Anschlagsmittel (35) besteht, wobei die Zugfeder (37) einerseits am Gleitring (36) und andererseits am Klappendeckel (2) oder einem ortsfesten Bauteil im Bereich des Auslassstutzens (1) befestigt ist.

7. Explosionsschutzklappe nach einem der Ansprüche 4 bis 6, **dadurch gekennzeichnet, dass** die Dämpfungsvorrichtung (6) parallel zur Schwenklageranordnung (4) und im geringen Abstand von dieser angeordnet ist, so dass beide eine Baueinheit bilden.

8. Explosionsschutzklappe nach einem der vorhergehenden Ansprüche, **dadurch gekennzeichnet, dass** in der Schwenklageranordnung (4) die federbelastete Zuhaltevorrichtung (3) integriert ist.

9. Explosionsschutzklappe nach einem der vorhergehenden Ansprüche, **dadurch gekennzeichnet, dass** die federbelestete Zuhaltevorrichtung (3) einen gelenkig an der Schwenklageranordnung (4) angeordneten Fixierbalken (24) mit einem parallel zum geschlossen Klappendeckel (2) befestigten ersten Blattfederelement (25) enthält, das mit einer parallel am Klappendeckel (2) befestigten zweiten Blattfeder (26) überlappend in Eingriff steht, wobei der Fixierbalken 24 durch eine Federkraft in Richtung des ersten Blattfederelements (25) in seiner Schließposition gehalten wird.

10. Explosionsschutzklappe nach Anspruch 9, **dadurch gekennzeichnet, dass** der Fixierbalken (24) parallel zu einer Lagerstütze (22) der Schwenklageranordnung (4) verschwenkbar angeordnet ist, wobei durch einen rechtwinklig zum Fixierbalken (24) vorgesehenen federbelasteten verschiebbaren Andruckbolzen (28) der öffnungsdruck einstellbar ist.

11. Explosionsschutzklappe nach einem der vorhergehenden Ansprüche, **dadurch gekennzeichnet, dass** im Klappendeckel (2) eine Unterdruckausgleichsvorrichtung (10) integriert ist, die an der Unterseite des Klappendeckels (2) eine großflächige Rundscheibe (11) aufweist, die eine Aussparung im Klappendeckel (2) abdeckt, wobei sich die Rundscheibe (11), die sich durch mehrere federbelastete Befestigungselemente (13) auf den Ringbereich (12) des Klappendeckels (2) abstützt und mit diesem ab einem vorgegebenen Unterdruck einen Druckausgleichsspalt (18) öffnet.

12. Explosionsschutzklappe nach einem der vorhergehenden Ansprüche, **dadurch gekennzeichnet, dass** mindestens die zum Auslassstutzen (1) gerichtete untere Klappenfläche mindestens im Auflagebereich des Rohrstutzens (38) mit einem nicht haftenden wasserabweisenden Dichtelement (20) verbunden ist.

## Claims

1. Explosion-proof flap for compensating pressure differences in closed structures, in particular in containers, silos, pipelines and the like, in which there exists a risk of explosion as a result of the contents of the structure, with a hinged cover (2), which can be pivoted around at least one pivot bearing arrangement (4), holds an outlet connection piece (1) closed by means of at least one spring-loaded clamping device (3) in the excess pressure-free operating state and additionally has at least one damping device (6), **characterised in that** at least one pressure relieving device (5) having at least one force generating element (32), which at least initially applies an opening force to the hinged cover (2), is additionally provided in the region of the pivot bearing arrangement (4) at a predetermined radial distance from the pivot bearing (23).

2. Explosion-proof flap according to claim 1, **characterised in that** the pressure relieving device (5) is fastened to the hinged cover end (31) between the hinged cover (2) and a fixed structural part in the region of the base of the bearing connection piece (33) or to a fastening edge (7) of the outlet connection piece (1), and that the force generating element is configured as a pressure or tension spring element.

3. Explosion-proof flap according to one of claims 1 or 2, **characterised in that** the pressure relieving device (5) is provided parallel to the pivot bearing arrangement (4) and at a short spacing from this, so that both form a structural unit.

4. Explosion-proof flap according to one of the preceding claims, **characterised in that** the damping device (6) is arranged at a predetermined radial spacing from a pivot bearing (23) of the pivot bearing arrangement (4) between the hinged cover (2) and a fixed structural part below the hinged cover (2) and includes at least one damping element (37) with a pressure or tension spring (37), which is fastened to a damping-free slide bearing arrangement (34, 35, 36), the slide path of which corresponds to a predetermined damping-free opening angle range.

5. Explosion-proof flap according to claim 4, **characterised in that** the damping device (6) is arranged radially between the pivot bearing (23) and a pipe connection piece (38) of the outlet connection piece (1) below the hinged cover (2).

6. Explosion-proof flap according to one of claims 4 or 5, **characterised in that** the slide bearing arrangement comprises a slide bolt (34) oriented tangentially to the opening angle and a narrow slide ring (36) coaxially surrounding said bolt as well as a stop element (35), wherein the tension spring (37) is fastened on one side to the slide ring (36) and on the other side to the hinged cover (2) or to a fixed structural part in the region of the outlet connection piece (1).

7. Explosion-proof flap according to one of claims 4 to 6, **characterised in that** the damping device (6) is arranged parallel to the pivot bearing arrangement (4) and at a short spacing from this, so that both form a structural unit.

8. Explosion-proof flap according to one of the preceding claims, **characterised in that** the spring-loaded clamping device (3) is integrated into the pivot bearing arrangement (4).

9. Explosion-proof flap according to one of the preceding claims, **characterised in that** the spring-loaded clamping device (3) includes a retaining beam (24) pivoted to the pivot bearing arrangement (4) with a first leaf spring element (25), which is fastened parallel to the closed hinged cover (2) and is in overlapping engagement with a second leaf spring (26) fastened parallel to the hinged cover (2), wherein the retaining beam (24) is held in its closed position by a spring force in the direction of the first leaf spring element (25).

10. Explosion-proof flap according to claim 9, **characterised in that** the retaining beam (24) is arranged to pivot parallel to a bearing connection piece (22) of the pivot bearing arrangement (4), wherein the opening pressure is adjustable by means of a spring-loaded displaceable pressure bolt (28) provided at right angles to the retaining beam (24).

11. Explosion-proof flap according to one of the preceding claims, **characterised in that** integrated into the hinged cover (2) is an underpressure compensating device (10), which on the underside of the hinged cover (2) has a large-surface round disc (11) covering a recess in the hinged cover (2), wherein the round disc (11), which is supported by a plurality of spring-loaded fastening elements (13) on the ring region (12) of the hinged cover (2) and with this opens a pressure compensating gap (18) from a predetermined underpressure.

12. Explosion-proof flap according to one of the preceding claims, **characterised in that** at least the lower flap surface directed towards the outlet connection piece (1) is connected to a non-adherent water-resistant sealing element (20) at least in the supporting region of the pipe connection piece (38).

## Revendications

1. Trappe de protection contre les explosions, destinée à équilibrer les différences de pression dans des installations fermées, en particulier dans des récipients, des silos, des tuyauteries et éléments similaires, pour lesquelles il existe un risque d'explosion eu égard aux produits contenus, comportant un couvercle (2), qui est apte à pivoter autour d'au moins un système de paliers pivotants (4) et qui, par l'intermédiaire d'au moins un dispositif de retenue (3) sollicité par ressort, maintient fermée une tubulure de sortie (1) à l'état de service sans surpression et comporte au moins encore un dispositif d'amortissement (6), **caractérisée en ce que**, dans la zone du système de paliers pivotants (4) à une distance radiale définie du palier pivotant (23), il est prévu encore au moins un dispositif de détente (5), qui comporte au moins un élément de production de force (32) qui, au moins au début, exerce une force d'ouverture sur le couvercle (2).

2. Trappe de protection contre les explosions selon la revendication 1, **caractérisée en ce que** le dispositif de détente (5) est fixé à l'extrémité (31) du couvercle entre le couvercle (2) et un élément fixe dans la zone du pied (33) du support de palier ou sur un bord de fixation (7) de la tubulure de sortie (1), et **en ce que** l'élément de production de force est réalisé sous la forme d'un ressort de compression ou de traction (32).

3. Trappe de protection contre les explosions selon la revendication 1 ou 2, **caractérisée en ce que** le dispositif de détente (5) est prévu parallèlement au système de paliers pivotants (4) et à faible distance de celui-ci, de telle sorte que tous deux forment une unité.

4. Trappe de protection contre les explosions selon l'une quelconque des revendications précédentes, **caractérisée en ce que** le dispositif d'amortissement (6) est disposé à une distance radiale définie d'un palier pivotant (23) du système de paliers pivotants (4) entre le couvercle (2) et un élément fixe en dessous du couvercle (2) et comporte au moins un élément d'amortissement (37) avec un ressort de compression ou de traction (37), qui est fixé à un système de palier de glissement (34, 35, 36) sans amortissement, dont la trajectoire de glissement correspond à une zone angulaire d'ouverture sans amortissement définie.

5. Trappe de protection contre les explosions selon la revendication 4, **caractérisée en ce que** le dispositif d'amortissement (6) est disposé radialement entre le palier pivotant (23) et un piquage (38) de la tubulure de sortie (1) en dessous du couvercle (2).

6. Trappe de protection contre les explosions selon la revendication 4 ou 5, **caractérisée en ce que** le système de palier de glissement est formé par un boulon de glissement (34), orienté tangentiellement à l'angle d'ouverture, et une bague de glissement (36) étroite, entourant coaxialement celui-ci, ainsi qu'un moyen de butée (35), le ressort de traction (37) étant fixé, d'une part, à la bague de glissement (36) et, d'autre part, au couvercle (2) ou à un élément fixe dans la zone de la tubulure de sortie (1).

7. Trappe de protection contre les explosions selon l'une quelconque des revendications 4 à 6, **caractérisée en ce que** le dispositif d'amortissement (6) est disposé parallèlement au système de paliers pivotants (4) et à faible distance de celui-ci, de telle sorte que tous deux forment une unité.

8. Trappe de protection contre les explosions selon l'une quelconque des revendications précédentes, **caractérisée en ce que** le dispositif de retenue (3), sollicité par ressort, est intégré dans le système de paliers pivotants (4).

9. Trappe de protection contre les explosions selon l'une quelconque des revendications précédentes, **caractérisée en ce que** le dispositif de retenue (3) sollicité par ressort comporte une barre de fixation (24), agencée de manière articulée sur le système de paliers pivotants (4) et munie d'un premier ressort à lames (25), qui est fixé parallèlement au couvercle (2) fermé et qui est en prise par chevauchement avec un deuxième ressort à lames (26) fixé parallèlement sur le couvercle (2), la barre de fixation (24) étant maintenue dans sa position de fermeture par une force de ressort en direction du premier ressort à lames (25).

10. Trappe de protection contre les explosions selon la revendication 9, **caractérisée en ce que** la barre de fixation (24) est montée pivotante parallèlement à un support de palier (22) du système de paliers pivotants (4), la pression d'ouverture pouvant être réglée par un boulon de pression (28) mobile, sollicité par ressort et prévu perpendiculairement à la barre de fixation (24).

11. Trappe de protection contre les explosions selon l'une quelconque des revendications précédentes, **caractérisée en ce que** dans le couvercle (2) est intégré un dispositif de compensation de la dépression (10) qui, sur la face inférieure du couvercle (2), comporte une plaque ronde (11) de grande surface, qui masque un évidement dans le couvercle (2), sachant que la plaque ronde (11) prend appui, par l'intermédiaire de plusieurs éléments de fixation (13) sollicités par ressort, sur la zone annulaire (12) du couvercle (2) et ouvre avec celui-ci, à partir d'une dépression définie, une fente d'équilibrage de pression (18).

12. Trappe de protection contre les explosions selon l'une quelconque des revendications précédentes, **caractérisée en ce qu'**au moins la surface inférieure de la trappe, orientée vers la tubulure de sortie (1), est reliée au moins dans la zone de pose du piquage (38) à un élément d'étanchéité (20) hydrofuge non adhésif.
